# EUROPEAN PATENT APPLICATION

(11) **EP 2 222 047 A1**
(43) Date of publication of application: **25.08.2010**
(21) Application number: 08871543.8
(22) Date of filing: 22.12.2008
(51) Int. Cl.: H04L 29/06

(54) **A METHOD, MEDIA GATEWAY AND MEDIA GATEWAY CONTROLLER FOR IDENTIFYING THE MEDIA RESOURCE**

(30) Priority: 29.12.2007 CN 200710033046
(71) Applicant: Huawei Technologies Co., Ltd., Longgang District, Shenzhen Guangdong 518129 (CN)
(72) Inventor: LIN, Yangbo, Shenzhen Guangdong 518129 (CN)
(74) Representative: Thun, Clemens
(86) International application number: PCT/CN2008/073634
(87) International publication number: WO 2009/092251

(57) **Abstract**

A method for identifying media resources, a media gateway (MG), and a media gateway controller (MGC) are disclosed. The method for identifying media resources includes the following steps: the MG operates a media resource according to a command request sent from the MGC, and associates the operated media resource with a media resource identifier (MRI); the MG returns the information of the media resource that is already associated with the MRI to the MGC through a command reply. With the present invention, the MGC and the MG can manage and control a media resource for a media service by using a unique MRI.

## Description

This application claims priority to Chinese Patent Application No. 200710033046.3, filed with the Chinese Patent Office on December 29, 2007 and entitled "Media Gateway, Media Gateway Controller Media Gateway, and Method for Identifying Media Resources", which is incorporated herein by reference in its entirety.

### Field of the Invention

The present invention relates to a packet network technology, and in particular, to a media gateway, a media gateway controller, and a method for identifying media resources.

### Background of the Invention

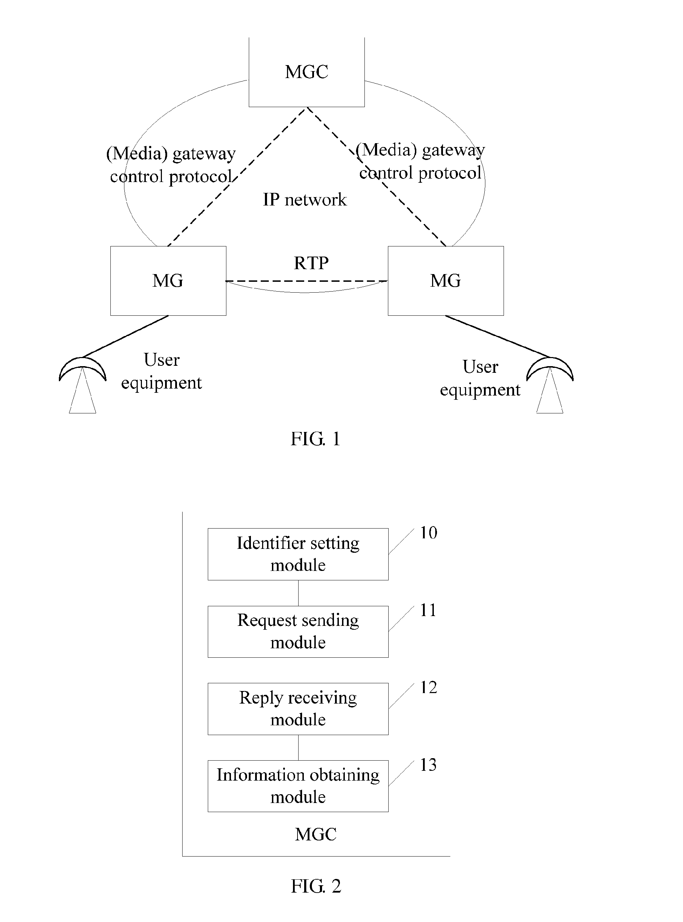

The media gateway controller (MGC) and the media gateway (MG) are two key components on a packet network where services are separated from bearers. The MGC is responsible for service control, and the MG is responsible for media bearing so that the service control plane is separated from the media bearer plane. Thus, the network resources can be better shared, the equipment upgrade and service expansion are simplified, and the development and maintenance costs are reduced. FIG. 1 illustrates the networking of an MG and an MGC in the prior art.

At present, the H.248/Media Gateway Control Protocol (MeGaCo) and the Media Gateway Control Protocol (MGCP) are main protocols for communications between the MG and the MGC. In addition, H.248/MeGaCo is developed on the basis of MGCP. Taking H.248 as an example, various resources on the MG are abstractly represented by terminations. The terminations are categorized into physical terminations and ephemeral terminations. Physical terminations represent some physical entities that exist semi-permanently, for example, a time division multiplexing (TDM) timeslot. Ephemeral terminations represent some public resources requested ephemerally and released after use, for example, a Real-time Transport Protocol (RTP) stream. A root termination is a special termination used for representing the entire MG. The associations between terminations are abstractly represented by contexts. A context may include multiple terminations. Thus, a topology is used for describing mutual relationships between the terminations. A null context includes terminations that are not associated with other terminations.

Based on the above abstract connection model, interactions between the services and the bearers are actually operations on the terminations and the contexts. Such operations are performed through command requests and replies between the MGC and the MG. Command types include: Add, Modify, Subtract, Move, AuditValue, AuditCapabilities, Notify, and ServiceChange. Command parameters, also known as descriptors, are categorized into Property, Signal, Event, and Statistic. For better description, parameters with service relevance are aggregated into a package logically.

When a user requests the MGC for a media service, for example, when the user requests to play a media file, the MGC needs to instruct the MG to allocate corresponding media resources. For the MGC and the MG, this is an initialization process of providing media services. In addition, the user needs to know information about these media resources to properly use and control the provided media services. Thus, the media resources allocated to the media services must be uniquely identified during the interactions between the MGC and the MG. The prior (media) gateway control protocol does not have such a support mechanism.

### Summary of the Invention

Embodiments of the present invention provide a method for identifying media resources, so that the MGC and the MG can identify media resources allocated to media services and better manage and control these media resources.

A method for identifying media resources in an embodiment of the present invention includes:
operating, by an MG, a media resource according to a command request sent from an MGC, and associating the media resource with a media resource identifier (MRI); and
returning, by an MG, the information of the media resource that is already associated with the MRI to the MGC through a command reply.

An MGC provided in an embodiment of the present invention includes:
an identifier setting module, configured to set an MRI in a command request sent from a request sending module;
the request sending module, configured to send a command request for operating a media resource to an MG;
a reply receiving module, configured to receive a command reply from the MG, where the command reply corresponds to the command request for operating the media resource from the request sending module ; and
an information obtaining module, configured to obtain the information of the media resource that is already associated with the MRI from the command reply received by the reply receiving module.

An MG provided in an embodiment of the present invention includes:
a request receiving module, configured to receive a command request for operating a media resource from an MGC;
an identifier associating module, configured to: operate the media resource according to the command request sent from the MGC, and associate the media resource with an MRI; and
a reply sending module, configured to return the information of the media resource to the MGC through a command reply.

The present invention may bring the following benefits:
By using the method for identifying media resources, the MGG, and the MG provided in embodiments of the present invention, the MG associates the MRI with the media resource; the MGC and the MC can manage and control the media resource by using the unique MRI so as to provide users with media services. Thus, the users can also use and control the provided media services.

### Brief Description of the Drawings

FIG. 1 is a schematic diagram illustrating the networking of an MG and an MGC in the prior art;
FIG. 2 shows a structure of an MGC in an embodiment of the present invention;
FIG. 3 shows a structure of an MG in an embodiment of the present invention;
FIG. 4 is a flowchart of a method for identifying media resources according to a first embodiment of the present invention; and
FIG. 5 is a flowchart of a method for identifying media resources according to a second embodiment of the present invention.

### Detailed Description of the Embodiments

Embodiments of the present invention provide an MGC, an MG, and a method for identifying media resources, so that the MGC and the MG can manage and control the media resource allocated to a media service by using a unique MRI. The MRI corresponds to the media resource, and is used for differentiating the media resource from other media resources.

The method for identifying media resources in embodiments of the present invention is based on an extended (media) gateway control protocol (including but not limited to H.248/MeGaCo and MGCP).

FIG. 2 shows a structure of an MGC in an embodiment of the present invention.

The MGC provided in this embodiment includes an identifier setting module 10, a request sending module 11, a reply receiving module 12, and an information obtaining module 13.

The identifier setting module 10 is configured to set an MRI in a command request sent from the request sending module 11. If the MRI is set to a specific value, it indicates that the MGC instructs the MG to associate the operated media resource with the MRI or operate the media resource associated with the MRI. If the MRI is set to "CHOOSE" or wildcard "$", it indicates that the MGC wishes the MG to determine an MRI for the media resource operated by the MG and return the determined MRI and the information of the media resource associated with the MRI to the MGC.

The request sending module 11 is configured to send the command request for operating the media resource to the MG. It should be noted that the types of commands for interactions between the MGC and the MG include but are not limited to Add, Modify, Subtract, Move, AuditValue, AuditCapabilities, Notify, and ServiceChange. Command parameters are categorized into Property, Signal, Event, and Statistic. When a media resource needs to be identified, the command request for operating the media resource is a media resource allocation or adjustment command, including Add, Modify, and Move. After the media resource is associated with the MRI, that is, the media resource is uniquely identified by the MRI, the MRI may be used for indicating the operated media resource in the subsequent commands for interactions between the MGC and the MG, such as Add, Modify, Subtract, Move, AuditValue, AuditCapabilities, Notify, and ServiceChange.

The reply receiving module 12 is configured to receive a command reply sent from the MG, where the command reply corresponds to the command request for operating the media resource from the request sending module 10.

The information obtaining module 13 is configured to obtain the information of the MRI and/or the media resource from the command reply received by the reply receiving module 12. When the MRI set by the identifier setting module 10 is a specific value, the information obtained from the command reply received by the reply receiving module 12 includes information of the media resource associated with the MRI. When the MRI property set by the identifier setting module 10 is "CHOOSE" or wildcard "$", the information obtained from the command reply received by the reply receiving module 12 includes an MRI determined by the MG for the operated media resource and information of the media resource associated with the MRI.

It should be noted that the MRI may be represented by a property. The property may be defined in a prior package or a new package.

The property may be a string in the format of uniform resource identifier (URI) or internationalized resource identifier (IRI). The URI may be a simple name or a universal resource locator (URL). The URL schemes may include file, ftp, http, rtsp, rtsps, and rtspu. The file scheme is used for local media resources on the MG; the ftp scheme is used for media resources on devices other than the MG; the http scheme is used for both local and remote media resources. The rtsp, rtsps, and rtspu schemes are used for media resources transmitted in the form of streams; the rtsp scheme is used for transmission over the Transmission Control Protocol (TCP); the rtsps scheme is used for transmission over the Transport Layer Security (TLS); the rtspu scheme is used for transmission over the User Datagram Protocol (UDP). For example, "rtsp://server.example.com/ABC/123.rm".

The property may also be an integer, the value of which is equivalent to a media resource number. The numbering plan may be designed according to the actual need. This integer ID is similar to the simple name in the preceding string ID.

This property may be applied on a termination or a stream on the termination.

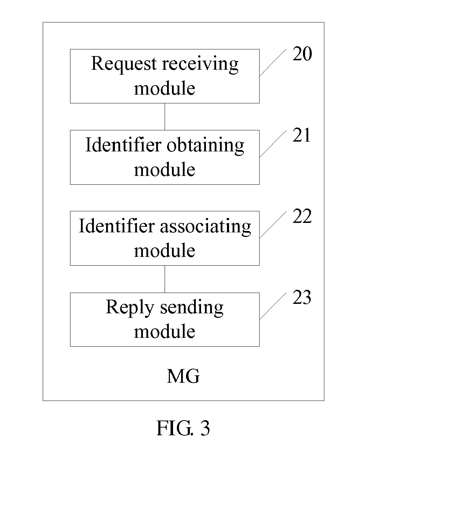

FIG. 3 shows a structure of an MG in an embodiment of the present invention.

The MG provided in this embodiment includes a request receiving module 20, an identifier obtaining module 21, an identifier associating module 22, and a reply sending module 23.

The request receiving module 20 is configured to receive a command request for operating a media resource from the MGC. It should be noted that the types of commands for interactions between the MGC and the MG include but are not limited to Add, Modify, Subtract, Move, AuditValue, AuditCapabilities, Notify, and ServiceChange. Command parameters are categorized into Property, Signal, Event, and Statistic. When a media resource needs to be identified, the command request for operating the media resource from the MGC is a media resource allocation or adjustment command, including Add, Modify, and Move. After the media resource is associated with the MRI, that is, the media resource is uniquely identified by the MRI, the MRI may be used to indicate the operated media resource in the subsequent commands for interactions between the MGC and the MG, such as Add, Modify, Subtract, Move, AuditValue, AuditCapabilities, Notify, and ServiceChange.

The identifier obtaining module 21 is configured to obtain an MRI from the command request received by the request receiving module 20. If the MRI is a specific value, the MG associates the MRI with the operated media resource or operates the media resource after knowing the media resource according to the MRI. If the MRI is "CHOOSE" or wildcard "$", the MG determines an MRI for the media resource operated by the MG, and associates the MRI with the media resource.

The identifier associating module 22 is configured to: associate the media resource operated by the MG with the MRI, and store the association information.

The reply sending module 23 is configured to send a command reply to the MGC, where the command reply corresponds to the command request for operating the media resource received by the request receiving module 20.

It should be noted that the MRI may be represented by a property. The property may be defined in a prior package or a new package.

The property may be a string in the format of URI or IRI. The URI may be a simple name or a URL. The URL schemes may include file, ftp, http, rtsp, rtsps, and rtspu. The file scheme is used for local media resources on the MG; the ftp scheme is used for media resources on devices other than the MG; the http scheme is used for both local and remote media resources. The rtsp, rtsps, and rtspu schemes are used for media resources transmitted in the form of streams; the rtsp scheme is used for transmission over TCP; the rtsps scheme is used for transmission over TLS; the rtspu scheme is used for transmission over UDP. For example, "rtsp://server.example.com/ABC/123.rm".

The property may also be an integer, the value of which is equivalent to a media resource number. The numbering plan may be designed according to the actual need. This integer ID is similar to the simple name in the preceding string ID.

This property may be applied on a termination or a stream on the termination.

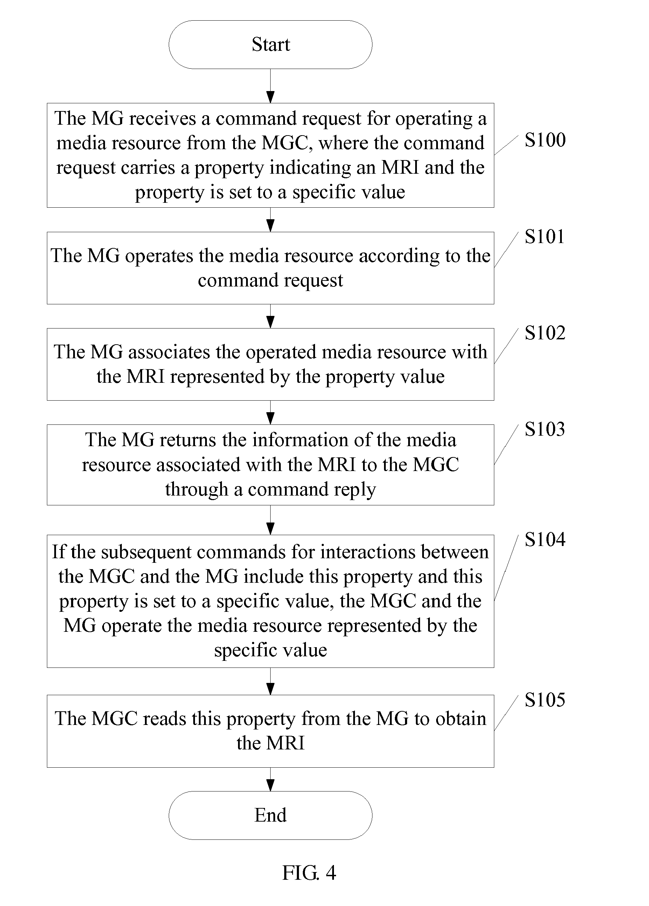

FIG. 4 is a flowchart of a method for identifying media resources according to a first embodiment of the present invention.

A property is used for representing the MRI. The property may be defined in a prior package or a new package. For example, the new package is named "media resource identification (mri) package", and the property is named "specification (spec)". The format of mri/spec is used.

The property may be a string in the format of URI or IRI. The URI may be a simple name or a URL. The URL schemes may include file, ftp, http, rtsp, rtsps, and rtspu. The URL schemes may include file, ftp, http, rtsp, rtsps, and rtspu. The file scheme is used for local media resources on the MG; the ftp scheme is used for media resources on devices other than the MG; the http scheme is used for both local and remote media resources. The rtsp, rtsps, and rtspu schemes are used for media resources transmitted in the form of streams; the rtsp scheme is used for transmission over TCP; the rtsps scheme is used for transmission over TLS; the rtspu scheme is used for transmission over UDP. For example, "rtsp://server.example.com/ABC/123.rm".

The property may also be an integer, the value of which is equivalent to a media resource number. The numbering plan may be designed according to the actual need. This integer ID is similar to the simple name in the preceding string ID.

This property may be applied on a termination or a stream on the termination. If the property is used on the termination, the property is defined in the TerminationState descriptor. If the property is used on the stream, the property is defined in the LocalControl descriptor.

This property is readable and writable. That is, the MGC may set this property on the MG to identify a specified media resource, or the MGC may read this property from the MG to obtain the ID of a specified media resource.

The method for identifying media resources in this embodiment includes the following steps:
Step S 100: The MG receives a command request for operating a media resource from the MGC, where the command request carries a property indicating an MRI. The property is set to a specific value.

In this embodiment, the value of the property carried by the MGC is the MRI, indicating that the MGC requests to associate the media resource operated by the MG with the MRI.

Step S101: The MG operates the media resource according to the command request.

Step S102: The MG associates the operated media resource with the MRI.

Step S103: The MG returns the information of the media resource that is already associated with the MRI to the MGC through a command reply.

Step S104: So long as the subsequent commands for interactions between the MGC and the MG include this property and this property is set to a specific value, the MGC and the MG operate the media resource represented by the specific value.

Step S105: The MGC may also read this property from the MG (for example, by using the AuditValue command) to obtain the MRI.

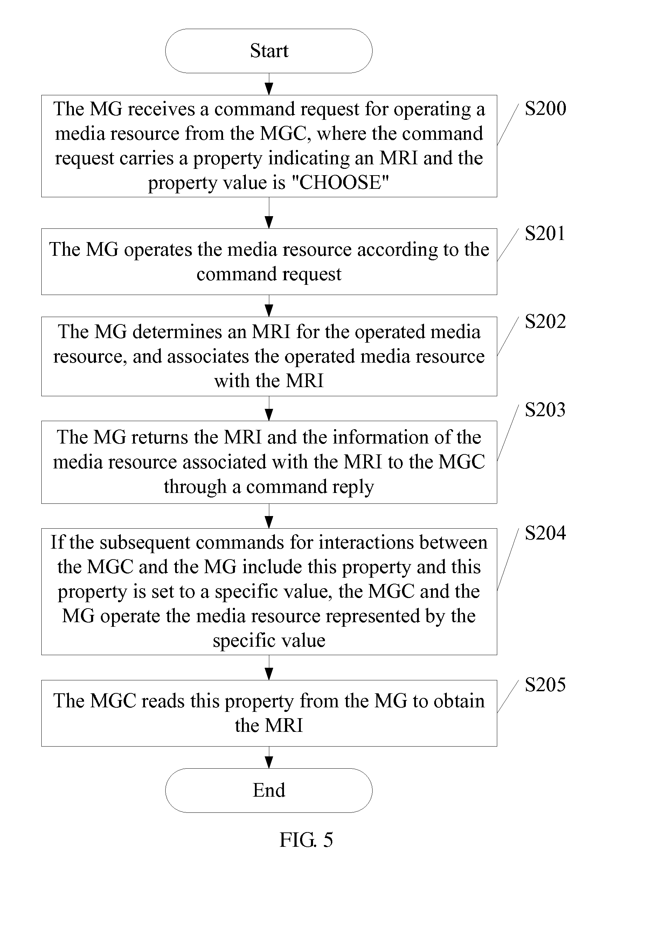

FIG. 5 is a flowchart of a method for identifying media resources according to a second embodiment of the present invention.

Step S200: The MG receives a command request for operating a media resource from the MGC, where the command request carries a property indicating an MRI.

In this embodiment, this property is carried by the MGC. The value of this property is "CHOOSE" or wildcard "$", indicating that the MGC wishes the MG to determine the MRI and return the determined MRI and the information of the media resource associated with the MRI to the MGC through a corresponding command reply.

S201: The MG operates the media resource according to the command request.

Step S202: The MG determines an MRI for the operated media resource, and associates the operated media resource with the MRI.

Step S203: The MG returns the MRI and the information of the media resource that is already associated with the MRI to the MGC through a command reply.

Step S204: So long as the subsequent commands for interactions between the MGC and the MG include this property and this property is set to a specific value, the MGC and the MG operate the media resource represented by the specific value.

Step S205: The MGC may also read this property from the MG (for example, by using the AuditValue command) to obtain the MRI.

The MRI property may be applied on a termination or a stream on the termination. The termination represents the root termination of the entire MG or an individual termination on the MG. Thus, different application layers of this property determine that the media resource identified by this property may belong to the entire MG, an individual termination on the MG, or a stream on the termination. If the MRI is set at a higher layer, for example, on the entire MG, but is used at a lower layer, for example, on an individual termination, the MRI identifies a media resource associated with the MRI on the individual termination.

For example, when the MGC sends an Add command to request a termination from the MG to transmit the media file 123.rm, the LocalControl descriptor includes mri/spec = "rtsp://server.example.com/ABC/123.-rm". In this way, the MG allocates a media resource related to the media transmission to the termination and associates the media resource with the MRI "rtsp://server.example.com/ABC/123.rm". Then, the MG returns the information of the media resource associated with the MRI to the MGC in the Local descriptor through a command reply.

It should be noted that the method for identifying media resources in embodiments of the present invention may be applied in real-time media control under an architecture where services and bearers are separated and which is represented by the MGC and the MG.

In the method for identifying media resources in embodiments of the present invention, the prior (media) gateway control protocols (including but not limited to H.248/MeGaCo and MGCP) are extended to uniquely identify a media resource, so that the MGC and the MG can manage and control the media resource by using a unique MRI.

Through the descriptions of the preceding embodiments, those skilled in the art may understand that the present invention may be implemented by software and a necessary universal hardware platform or by hardware. Therefore, the essence of the technical solution under the present invention or the contributions to the prior art may be embodied as a software product. The software product is stored in a storage medium, and includes several instructions that enable a computer device (PC, server or network device) to execute the methods provided in the embodiments of the present invention.

Although the present invention has been described through several exemplary embodiments, the invention is not limited to such embodiments. It is apparent that those skilled in the art can make various modifications and variations to the invention without departing from the spirit and scope of the invention. The invention shall cover the modifications and variations provided that they fall within the scope of protection defined by the following claims or their equivalents.

## Claims

1. A method for identifying media resources, comprising:
operating, by a media gateway (MG), a media resource according to a command request sent from a media gateway controller (MGC), and associating the media resource with a media resource identifier (MRI); and
returning, by the MG, information of the media resource to the MGC through a command reply.

2. The method according to claim 1, wherein the command request sent from the MGC carries the MRI.

3. The method of claim 2, wherein:
the MGC sets the MRI to a specific value; and
accordingly, the MG associates the MRI with the media resource.

4. The method according to claim 2, wherein the MGC sets the MRI to "CHOOSE" or wildcard, and accordingly, the step of associating the operated media resource with the MRI comprises:
determining, by the MG, an MRI for the media resource operated by the MG; and
associating, by the MG, the media resource with the determined MRI.

5. The method according to claim 4, wherein the step of returning, by the MG, the media resource information to the MGC comprises:
returning the determined MRI and the information of the media resource that is already associated with the MRI to the MGC.

6. The method according to claim 1, wherein the command request for operating the media resource is Add, Modify or Move.

7. The method according to any one of claims 1 to 5, wherein a subsequent command for interactions between the MGC and the MG carries the MRI and the MRI is used for indicating the media resource that needs to be operated by the command.

8. The method according to any one of claims 1 to 5, wherein the MGC may obtain the MRI from the MG through an Audit command.

9. The method according to any one of claims 1 to 5, wherein the MRI is presented by a property.

10. The method according to claim 9, wherein the MRI is a string or an integer.

11. The method according to claim 10, wherein when the property is a string, the MRI is in the format of uniform resource identifier (URI) or internationalized resource identifier (IRI).

12. The method according to any one of claims 1 to 5, wherein the MRI is used on a termination or a stream on the termination.

13. A media gateway controller (MGC), comprising:
an identifier setting module, configured to set a media resource identifier (MRI) in a command request sent from a request sending module;
the request sending module, configured to send the command request for operating a media resource to a media gateway (MG);
a reply receiving module, configured to receive a command reply sent from the MG, wherein the command reply corresponds to the command request for operating the media resource from the request sending module; and
an information obtaining module, configured to obtain information of the media resource that is already associated with the MRI from the command reply received by the reply receiving module.

14. The MGC according to claim 13, wherein the identifier setting module sets the MRI to a specific value to instruct the MG to associate the MRI with the media resource or operate the media resource associated with the MRI;
or the identifier setting module sets the MRI to "CHOOSE" or wildcard to instruct the MG to determine an MRI for the media resource operated by the MG and return the determined MRI and the information of the media resource associated with the MRI to the MGC through a command reply.

15. A media gateway (MG), comprising:
a request receiving module, configured to receive a command request for operating a media resource from a media gateway controller (MGC);
an identifier associating module, configured to operate the media resource according to the command request sent from the MGC, and associate the operated media resource with a media resource identifier (MRI); and
a reply sending module, configured to return information of the media resource to the MGC through a command reply.

16. The MG according to claim 15, wherein the command request sent from the MGC further carries an MRI; and the MG further comprises:
an identifier obtaining module, configured to obtain the MRI from the command request received by the request receiving module.

17. The MG according to claim 16, wherein: the identifier obtaining module obtains the MRI from the command request received by the request receiving module; if the MRI is a specific value, the identifier associating module associates the MRI with the media resource or operates the media resource after knowing the media resource associated with the MRI; and if the MRI is set to "CHOOSE" or wildcard, the identifier associating module determines an MRI for the media resource operated by the identifier associating module and associates the MRI with the media resource.
